# EUROPEAN PATENT APPLICATION

(11) **EP 1 724 782 A1**
(43) Date of publication of application: **22.11.2006**
(21) Application number: 05719878.0
(22) Date of filing: 03.03.2005
(51) Int. Cl.: G11B 31/00

(54) **PROCESSING CONTROL DEVICE, POWER SUPPLY CONTROL DEVICE, PROCESSING CONTROL METHOD, PROGRAM THEREOF, AND RECORDING MEDIUM CONTAINING THE PROGRAM**

(30) Priority: 09.03.2004 JP 2004065467
(71) Applicant: Pioneer Corporation, Tokyo 153-8654 (JP)
(72) Inventor: KAWAMURA, Takeshi, PIONEER CORP. Tokorozawa Plant, Tokorozawa-shi, Saitama 359-8522 (JP)
(74) Representative: Haley, Stephen
(86) International application number: PCT/JP2005/003574
(87) International publication number: WO 2005/086168

(57) **Abstract**

A recorder/player (100) dubs program data stored in an HD (171), for example, to a DVD (181) by using a dubbing controller of a CPU (240). When a recording/playing/displaying unit of the CPU (240) recognizes an input operation to perform processing other than dubbing during dubbing, it performs the processing other than dubbing as appropriate. When a power supply controller of the CPU (240) recognizes that the dubbing is completed, the power supply controller judges whether the processing other than dubbing is in progress. When the power supply controller judges that no processing other than dubbing is in progress, the power supply controller outputs supply interruption information requesting to interrupt power supply to a power supply unit (230). On the other hand, when the power supply controller judges that the processing other than dubbing is in progress, it outputs supply co

## Description

### TECHNICAL FIELD

The present invention relates to a processing control device for controlling power supply, a power supply control device, a processing control method, a program thereof, and a recording medium containing the program.

### BACKGROUND ART

There have been known recorders and recorder/player systems that have a dubbing function, a function of re-recording video data and the like that are recorded in various recording media including magnetic tapes such as videotapes, magnetic disks such as HDs (Hard Disks), optical disks such as DVDs (Digital Versatile Discs), and magneto-optical disks to other various recording media (see Patent Document 1, for example).

What is described in Patent Document 1 has a television receiver serving as an AV center, four VTRs (Video Tape Recorders), and others. During dubbing, the AV center keeps sending a command "notify when media end is reached" at suitable intervals to the recording VTR and the playing VTR both. In response, when either the recording VTR or the playing VTR reaches a media end, the recording VTR or the playing VTR sends information saying "reached media end" to the AV center. Receiving the information "reached media end" from one of the VTRs, the AV center stops the other VTR and executes All Power Off in which all AV devices are powered off.

[Patent Document 1] JP 08-045255 A (the left column in page 3 to the right column in page 5)

### DISCLOSURE OF THE INVENTION

### PROBLEMS TO BE SOLVED BY THE INVENTION

Incidentally, some recorders that have the all-power-off function possessed by the system described in Patent Document 1 are equipped with a function of receiving satellite broadcasts while dubbing. With recorders of such configurations, there is a possibility that All Power Off implemented after the dubbing is ended cuts off the reception of a satellite broadcast even when a user is viewing or listening to the satellite broadcast. Accordingly, a configuration capable of proper power supply is demanded.

In view of the above-mentioned circumstances, an object of the present invention is to provide a processing control device for controlling power supply properly, a power supply control device, a processing control method, a program thereof, and a recording medium containing the program.

### MEANS FOR SOLVING THE PROBLEMS

An invention according to Claim 1 relates to a processing control device including: a first processing executing unit for executing a first processing; a second processing executing unit for executing a second processing which differs from the first processing; an execution signal obtaining unit for obtaining a processing execution signal that signals execution of the second processing; a processing execution recognizing unit for recognizing, from the processing execution signal, execution of the second processing; a processing end recognizing unit for recognizing completion of the first processing; and a power supply controller for judging whether or not execution of the second processing has been recognized upon recognition of completion of the first processing, and when it is judged that execution of the second processing has not been recognized, controlling a power supply unit for supplying electric power to execute power supply interruption processing in which the supply is stopped.

An invention according to Claim 10 relates to a power supply control device including: a power supply unit for supplying power; and the processing control device according to any one of Claims 1 through 9.

An invention according to Claim 11 relates to a processing control method including: executing first processing; executing second processing which differs from the first processing; obtaining a processing execution signal that signals execution of the second processing; recognizing execution of the second processing from the processing execution signal; recognizing completion of the first processing; and judging whether or not execution of the second processing has been recognized upon recognition of completion of the first processing, and when it is judged that execution of the second processing has not been recognized, power supply interruption processing is executed to cause a power supply unit that supplies electric power, to stop the supply.

An invention according to Claim 12 relates to a processing control program for operating a computing unit to function as the processing control device of any one of Claims 1 through 9.

An invention according to Claim 13 relates to a processing control program for operating a computing unit to execute the processing control method of Claim 11.

An invention according to Claim 14 relates to a recording medium containing a processing control program, in which the processing control program of Claim 12 or 13 is stored in a manner readable by a computing unit.

### BRIEF DESCRIPTION OF DRAWINGS

FIG. 1 is a block diagram showing a schematic configuration of a recorder/player according to an embodiment of the present invention;
FIG. 2 is a block diagram showing a schematic configuration of a CPU according to the embodiment of the present invention;
FIG. 3 is a flow chart showing power supply processing in dubbing according to the embodiment of the present invention; and
FIG. 4 is a flow chart showing power supply processing in dubbing according to another embodiment of the present invention.

### EXPLANATION OF CODES

170: HD drive constituting a first storage or a second storage
171: HD constituting the first storage or the second storage
180: DVD drive constituting the first storage or the second storage
181: DVD constituting the first storage or the second storage
230: power supply unit constituting a power supply control device
240: CPU doubling as a computing unit
241: dubbing controller as a first processing executing unit constituting a processing control device and the power supply control device
242: recording/playing/displaying unit as a second processing executing unit constituting the processing control device and the power supply control device
243: post-processing active timer as a post-processing timekeeper which can constitute the processing control device and the power supply control device
244: concurrent-active timer as a mid-processing timekeeper which can constitute the processing control device, the power supply control device, and a processing interval recognizing unit, and which can also function as a processing interval counter
245: power supply controller which constitutes the processing control device and the power supply control device, and which also functions as an execution signal obtaining unit, a processing execution recognizing unit, and a processing end recognizing unit
246: timer controller as a post-processing timekeeping recognizing unit, a post-processing timekeeping controller, a mid-processing timekeeping recognizing unit, and a mid-processing timekeeping controller which can constitute the processing control device, the power supply control device, and the processing interval recognizing unit, and which can also function as an interval count recognizing unit
t: set timekeeping time which is a given period of time
u: set timekeeping time which is a given period of time

### BEST MODE FOR CARRYING OUT THE INVENTION

An embodiment of the present invention is described below with reference to the drawings. This embodiment describes by way of example a recorder/player having a processing control device and a power supply control device of the present invention. However, the present invention is not limited thereto and is applicable to any configuration that controls power supply.

### [Configuration of Recorder/player]

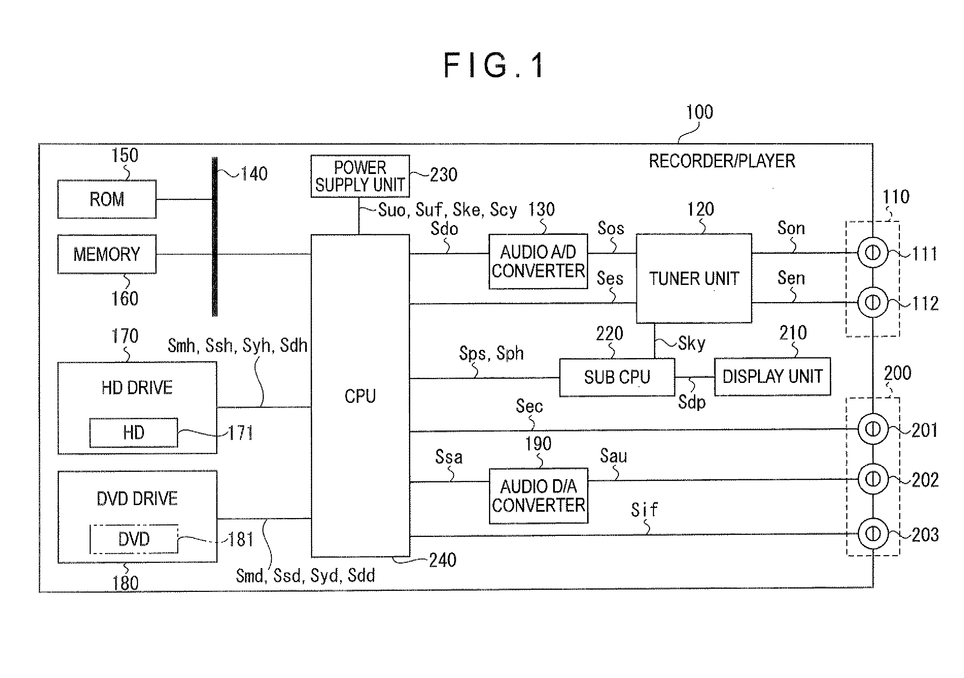

In FIG. 1, reference numeral 100 denotes a recorder/player. The recorder/player 100 stores a television program or the like suitably in an HD 171 constituting a first storage or a second storage or in a DVD 181 constituting the first storage or the second storage, and suitably has a display device (not shown) display the stored television program or the like. The recorder/player 100 also performs dubbing as first processing which is processing of suitably re-recording in the DVD 181 video data, audio data, and the like stored in the HD 171, for example, a television program. In parallel with dubbing, the recorder/player 100 suitably performs other processing than dubbing as second processing. For instance, the recorder/player 100 suitably performs, concurrently with dubbing, processing of having the display device display a television program of a satellite broadcast received by an antenna (not shown), or processing of playing a television program that is stored in the HD 171. In the following description, other processing than dubbing-related processing that is performed in parallel with dubbing will be referred to as parallel-to-dubbing processing if suitable. The recorder/player 100 has a data input unit 110, a tuner unit 120, an audio A/D converter 130, a bus 140, a ROM (Read Only Memory) 150., a memory 160, an HD drive 170, a DVD drive 180, an audio D/A converter 190, a data output unit 200, a display unit 210, a sub CPU (Central Processing Unit) 220, a power supply unit 230, a CPU 240 which doubles as a computing unit, and others.

The data input unit 110 has an audio input terminal 111 and a video input terminal 112. The audio input terminal 111 is, for example, a connector to which a plug (not shown) is detachably connected or a terminal to which a lead wire is connected. The audio input terminal 111 is connected to the tuner unit 120 and others. Also connected to the audio input terminal 111 detachably is an antenna (not shown) for receiving audio data of, for example, a television program that is sent from a satellite in satellite broadcasting or the like, and for outputting the received audio data. An input audio signal Son of audio data outputted from the antenna is inputted to the audio input terminal 111. The video input terminal 112 has a configuration similar to that of the audio input terminal 111. The video input terminal 112 is connected to the tuner unit 120 and others. Also connected to the video input terminal 112 detachably is an antenna (not shown) for receiving video data of, for example, a television program that is sent from a satellite in satellite broadcasting or the like, and for outputting the received video data. An input video signal Sen of video data outputted from the antenna is inputted to the video input terminal 112.

The tuner unit 120 is connected to the audio A/D converter 130, the sub CPU 220, the CPU 240, and others. The tuner unit 120 is controlled by the sub CPU 220 and outputs audio data and video data as data of, for example, a television program on an arbitrary channel. Specifically, the tuner unit 120 obtains audio data of the input audio signal Son and video data of the input video signal Sen which are inputted to the data input unit 110. The tuner unit 120 suitably obtains a tuning signal Sky from the sub CPU 220. Based on tuning request information of the tuning signal Sky which will be described later, the tuner unit 120 recognizes a request to output audio data and video data of a channel chosen by a user. The tuner unit 120 then obtains audio data of the chosen channel from among audio data inputted to the data input unit 110. The audio data is thereafter suitably converted into a tuned audio signal Sos, which is outputted to the audio A/D converter 130. The tuner unit 120 also obtains video data of the chosen channel from among video data inputted to the data input unit 110. The video data is thereafter suitably converted into a tuned video signal Ses, which is outputted to the CPU 240.

The audio A/D converter 130 is connected to the CPU 240 and others. The audio A/D converter 130 obtains audio data of the tuned audio signal Sos from the tuner unit 120. The audio data is then converted into digital audio data which is digitized sound data. The audio A/D converter 130 suitably converts the digital audio data into an input digital audio signal Sdo, and outputs the signal to the CPU 240.

The bus 140 is, for example, a PCI (Peripheral Component Interconnect) bus or an IEEE (Institute of Electrical and Electronic Engineers) 1394 bus. Connected to the bus 140 are the ROM 150, the memory 160, the CPU 240, and others.

The ROM 150 suitably stores in a readable manner various programs run on an OS (Operating System) that controls the overall operation of the recorder/player 100, and the like. The ROM 150 may have a configuration with a drive or a driver that stores in a recording medium such as an HD or an optical disk in a readable manner.

The memory 160 houses or stores various types of data suitably in a readable manner. The memory 160 may have a configuration with a drive or a driver that stores in a recording medium such as an HD or a magneto-optical disk in a readable manner.

The HD drive 170 is connected to the CPU 240 and others, and has the HD 171 as a recording medium. The HD drive 170 is controlled by the CPU 240, and suitably stores video data, digital audio data, and the like from the CPU 240 in the HD 171 in a 180 is controlled by the CPU 240, and suitably stores program data and the like from the CPU 240 in the DVD 181 in a readable manner. The DVD drive 180 and the DVD 181 constitute the first storage or second storage of the present invention. Specifically, the DVD drive 180 suitably obtains a DVD record signal Smd from the CPU 240. The DVD drive 180 next obtains program data of the DVD record signal Smd. Based on DVD recording request information of the DVD record signal Smd which will be described later, the DVD drive 180 recognizes a request to store the program data and the like in the DVD 181. The DVD drive 180 suitably stores the program data and the like in the DVD 181 in a readable manner. After that, the DVD drive 180 judges whether or not every piece of the program data and the like obtained from the CPU 240 has successfully been stored in the DVD 181. When it is judged that every piece of the program data and the like has successfully been stored in the DVD 181, the DVD drive 180 creates normal finish information to that effect. On the other hand, when it is judged that not every piece of the program data and the like has been stored in the DVD 181 successfully, the DVD drive 180 creates abnormal finish information to that effect. After that, the DVD drive 180 suitably converts the normal finish information or the abnormal finish information into a DVD completion signal Ssd, and outputs the signal to the CPU 240.

The DVD drive 180 also suitably reads program data and the like stored in the DVD 181, and outputs the read data to the CPU 240. Specifically, the DVD drive 180 suitably obtains a DVD read signal Syd from the CPU 240. Based on DVD read request information of the DVD read signal Syd which will be described later, the DVD drive 180 recognizes a request to output program data related to an arbitrary television program and the like. After that, the DVD drive 180 reads the requested program data and the like out of the DVD 181. Then, the DVD drive 180 suitably converts the read program data and the like into a DVD read data signal Sdd, and outputs the signal to the CPU 240.

The audio D/A converter 190 is connected to the CPU 240 and others. The audio D/A converter 190 obtains digital audio data of an output digital audio signal Ssa from the CPU 240, and converts the digital audio data into analog audio data, which is an analog format sound data. The audio D/A converter 190 suitably converts the analog audio data into an output analog audio signal Sau, and outputs the signal to the data output unit 200.

The data output unit 200 has a video output terminal 201, an analog audio output terminal 202, and a DIF (Digital Interface) audio output terminal 203, which have a configuration similar to that of, for example, the audio input terminal 111 of the data input unit 110. The video output terminal 201 is connected to the CPU 240 and others. Connected to the video output terminal 201 detachably is the display device (not shown) which displays video data on a screen, or the like. The video output terminal 201 receives from the CPU 240 an input of an output video signal Sec of video data in a CVBS format, a YC format, a YCbCr format, or the like. The analog audio output terminal 202 is connected to the audio D/A converter 200 and others. Connected to the analog audio output terminal 202 detachably is a display device or a speaker (not shown) which outputs analog audio data as a sound. The analog audio output terminal 202 receives an input of the output analog audio signal Sau of digital audio data from the audio D/A converter 190. The DIF audio output terminal 203 is connected to the CPU 240 and others. Connected to the DIF audio output terminal 203 detachably is a display device or a speaker (not shown) which outputs audio data in, for example, a DIF format as a sound. The DIF audio output terminal 203 receives an input of an output DIF audio signal Sif of DIF format audio data from the CPU 240.

The display unit 210 is connected to the sub CPU 220 and others. The display unit 210 is, for example, a liquid crystal panel, an organic EL (Electro Luminescence) panel, an FED (Field Emission Display), or an electrophoretic display panel. The display unit 210 is controlled by the sub CPU 220, and displays on a screen image data of an image signal Sdp outputted from the sub CPU 220. Examples of image data to be displayed on the screen include a channel chosen by a user, and various kinds of information indicating operation states of the recorder/player 100 such as a play time of program data stored in the HD 171 or the DVD 181.

The sub CPU 220 is connected to the CPU 240 and others. The sub CPU 220 is controlled by the CPU 240, and controls the operation of the tuner unit 120 suitably. Specifically, the sub CPU 220 suitably obtains a set station signal Sps from the CPU 240. Based on set station information of the set station signal Sps which will be described later, the sub CPU 220 recognizes information about a channel chosen by a user. The sub CPU 220 then creates tuning request information containing a request to output program data of the chosen channel. After that, the sub CPU 220 suitably converts the tuning request information into the tuning signal Sky, and outputs the signal to the tuner unit 120.

The sub CPU 220 also controls the operation of the display unit 210 suitably. Specifically, the sub CPU 220 suitably obtains a display signal Sph from the CPU 240. Based on image display information of the display signal Sph which will be described later, the sub CPU 220 recognizes information about image data to be displayed by the display unit 210. The sub CPU 220 then creates image data from this information. After that, the sub CPU 220 suitably converts the image data into the image signal Sdp, and outputs the signal to the display unit 210.

The power supply unit 230 is connected to the CPU 240 and others. The power supply unit 230 is controlled by the CPU 240. and supplies electric power to the recorder/player 100 suitably. Specifically, the power supply unit 230 suitably obtains a power-on signal Suo from the CPU 240. Based on on-request information of the power-on signal Suo which will be described later, the power supply unit 230 recognizes a request to turn on the power of the recorder/player 100. After that, the power supply unit 230 immediately starts power supply to the recorder/player 100 to power on the recorder/player 100. The power supply unit 230 also suitably obtains a power-off signal Suf from the CPU 240. Based on off-request information of the power-off signal Suf which will be described later, the power supply unit 230 recognizes a request to turn off the power of the recorder/player 100. The power supply unit 230 immediately stops power supply to the recorder/player 100 to power off the recorder/player 100.

The power supply unit 230 suitably obtains a supply continuation signal Ske from the CPU 240. Based on supply continuation information of the supply continuation signal Ske which will be described later, the power supply unit 230 recognizes a request to continue power supply to the recorder/player 100. After that, the power supply unit 230 continue power supply to the recorder/player 100 to keep the power on. The power supply unit 230 also suitably obtains a supply interruption signal Scy from the CPU 240. Based on supply interruption information of the supply interruption signal Scy which will be described later, the power supply unit 230 recognizes a request to interrupt power supply to the recorder/player 100. After that, the power supply unit 230 immediately interrupts power supply to the recorder/player 100 to power off the recorder/player 100.

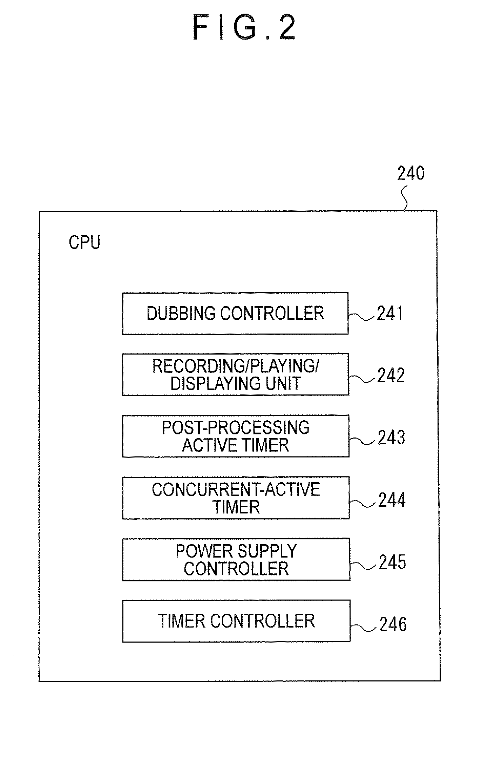

The CPU 240 has input and output ports (not shown), for example, a tuner port to which the tuner unit 120 is connected, an audio A/D port to which the audio A/D converter 130 is connected, a bus port to which the bus 140 is connected, an HD port to which the HD drive 170 is connected, a DVD port to which the DVD drive 180 is connected, an audio D/A port to which the audio D/A converter 190 is connected, a video output port to which the video output terminal 201 is connected, a DIF audio output port to which the DIF audio output terminal 203 is connected, a sub port to which the sub CPU 220 is connected, a power supply port to which the power supply unit 230 is connected, and an input port to which an input unit (not shown) is connected. As shown in FIG. 2, the CPU 240 has various programs including: a dubbing controller 241 as a first processing executing unit; a recording/playing/displaying unit 242 as a second processing executing unit; a post-processing active timer 243 as a post-processing timekeeper; a concurrent-active timer 244 as a mid-processing timekeeper; a power supply controller 245 which also functions as an execution signal obtaining unit, a processing execution recognizing unit, and a processing end recognizing unit; and a timer controller 246 as a post-processing timekeeping recognizing unit, a post-processing timekeeping controller, a mid-processing timekeeping recognizing unit, and a mid-processing timekeeping controller. The dubbing controller 241, the recording/playing/displaying unit 242, the post-processing active timer 243, the concurrent-active timer 244, the power supply controller 245, and the timer controller 246 constitute the processing control device of the present invention. Further, the dubbing controller 241, the recording/playing/displaying unit 242, the post-processing active timer 243, the concurrent-active timer 244, the power supply controller 245, the timer controller 246. and the power supply unit 230 constitute the power supply control device of the present invention. The processing control device and power supply control device of the present invention may have a configuration that does not include the post-processing active timer 243, the concurrent-active timer 244, and the timer controller 246 in the above-described configuration.

The dubbing controller 241 performs dubbing of program data suitably based on an input operation of the input unit by a user. Specifically, the dubbing controller 241 obtains a dubbing operation signal from the input unit and recognizes a setting input that requests execution of one of dubbing of program data that is stored in the HD 171 to the DVD 181, dubbing of program data that is stored in the DVD 181 to the HD 171, dubbing of program data that is stored in an arbitrary storage area of the HD 171 to another storage area of the HD 171, and the like. Upon recognizing, for example, a request for dubbing of program data in the HD 171 to the DVD 181, the dubbing controller 241 creates HD read request information to request to output program data related to an arbitrary television program and the like in the HD 171. The dubbing controller 241 suitably converts the HD read request information into the HD read signal Syh, and outputs the signal to the HD drive 170. The dubbing controller 241 also suitably creates a dubbing start signal, which signals that dubbing is about to start due to obtaining a dubbing operation signal from the input unit, in other words, due to recognizing an input operation made by a user. After that, the dubbing controller 241 outputs the dubbing start signal to the power supply controller 245.

The dubbing controller 241 suitably obtains program data and the like of the HD read data signal Sdh from the HD drive 170. The dubbing controller 241 next creates DVD recording request information requesting to store the program data and the like in the DVD 181. The dubbing controller 241 suitably converts the program data, the DVD recording request information, and the like into the DVD record signal Smd, and outputs the signal to the DVD drive 180. This causes the DVD drive 180 to store the program data in the DVD 181 in accordance with the DVD record signal Smd, thereby dubbing program data in the HD 171 to the DVD 181. After that, the dubbing controller 241 suitably obtains the DVD completion signal Ssd from the DVD drive 180, for example. The dubbing controller 241 judges from the DVD completion signal Ssd whether or not every piece of the program data outputted to the DVD drive 180 has successfully been dubbed to the DVD 181, in other words, whether or not the dubbing has been finished normally. When the DVD completion signal Ssd is normal finish information, it is judged that the dubbing has been finished normally. Then, the dubbing controller 241 creates a normal finish signal indicating that the dubbing has been finished normally, and suitably outputs the signal to the power supply controller 245. On the other hand, when the DVD completion signal Ssd is abnormal finish information, it is judged that the dubbing has ended in error. Then, the dubbing controller 241 creates an error finish signal indicating that the dubbing has ended in error, and suitably outputs the signal to the power supply controller 245.

During dubbing, the dubbing controller 241 receives a dubbing cancel operation signal from the input unit and recognizes a setting input that requests to cancel the dubbing. Then, the dubbing controller 241 ends the ongoing dubbing. The dubbing controller 241 also suitably creates a cancel finish signal, which signals that dubbing has been cancelled due to obtaining a dubbing cancel operation signal from the input unit, in other words, due to recognizing an input operation made by a user. The dubbing controller 241 outputs the cancel finish signal to the power supply controller 245.

The recording/playing/displaying unit 242 suitably performs various types of processing other than dubbing-related processing in accordance with an input operation made by a user to the input unit (not shown). When the dubbing controller 241 is performing dubbing, the recording/playing/displaying unit 242 executes various types of processing other than dubbing-related processing in parallel with the dubbing.

Specifically, the recording/playing/displaying unit 242 obtains a processing operation signal from the input unit, and recognizes a setting input that requests to, for example, display a television program of an arbitrary channel on the screen of the display device. Then, the recording/playing/displaying unit 242 creates set station information containing information about this channel. The recording/playing/displaying unit 242 suitably converts the set station information into the set station signal Sps, and outputs the signal to the sub CPU 220. The recording/playing/displaying unit 242 also suitably creates a processing start signal doubling as a processing execution signal that signals that other processing than dubbing-related processing is about to start due to obtaining a processing operation signal from the input unit, in other words, due to recognizing an input operation made by a user. The recording/playing/displaying unit 242 outputs the processing start signal to the power supply controller 245. After that, the recording/playing/displaying unit 242 obtains the tuned video signal Ses from the tuner unit 120 suitably. Video data of the tuned video signal Ses is suitably converted into video data having a CVBS format, a YC format, a YCbCr format, or the like. The recording/playing/displaying unit 242 suitably converts the video data into the output video signal Sec, and outputs the signal to the video output terminal 201. The recording/playing/displaying unit 242 also suitably obtains the input digital audio signal Sdo from the audio A/D converter 130. The recording/playing/displaying unit 242 suitably converts digital audio data of the input digital audio signal Sdo into the output digital audio signal Ssa, and outputs the signal to the audio D/A converter 190. The recording/playing/displaying unit 242 also suitably converts digital audio data of the input digital audio signal Sdo into DIF format audio data. The recording/playing/displaying unit 242 then suitably converts the audio data into the output DIF audio signal Sif, and outputs the signal to the DIF audio output terminal 203. The recording/playing/displaying unit 242 creates image display information requesting the display unit 210 to display, for example, a channel of program data which is obtained by the tuner unit 120. The reeording/playing/displaying unit 242 suitably converts the image display information into the display signal Sph, and outputs the signal to the sub CPU 220.

The recording/playing/displaying unit 242 obtains a processing operation signal from the input unit and recognizes a setting input that requests to play program data in, for example, the DVD 181. Then, the recording/playing/displaying unit 242 creates DVD read request information requesting for an output of the program data. The recording/playing/displaying unit 242 then suitably converts the DVD read request information into the DVD read signal Syd, and outputs the signal to the DVD drive 180. The recording/playing/displaying unit 242 also suitably creates a processing start signal and outputs the signal to the power supply controller 245. After that, the recording/playing/displaying unit 242 suitably obtains the DVD read data signal Sdd from the DVD drive 180. Video data that is program data of the DVD read data signal Sdd is suitably converted into video data having one of the aforementioned formats or other formats. The recording/playing/displaying unit 242 suitably converts the video data into the output video signal Sec and outputs the signal to the video output terminal 201. The recording/playing/displaying unit 242 also suitably modifies audio data that is program data of the DVD read data signal Sdd into the output digital audio signal Ssa, and outputs the signal to the audio D/A converter 190. The recording/playing/displaying unit 242 also suitably converts audio data that is program data of the DVD read data signal Sdd into DIF format audio data. The recording/playing/displaying unit 242 then suitably converts the audio data into the output DIF audio signal Sif, and outputs the signal to the DIF audio output terminal 203. The recording/playing/displaying unit 242 suitably recognizes a play time of program data. Next, the recording/playing/displaying unit 242 creates image display information requesting the display unit 210 to display, for example, a play time of the program data. The recording/playing/displaying unit 242 suitably converts the image display information into the display signal Sph, and outputs the signal to the sub CPU 220.

The recording/playing/displaying unit 242 also suitably obtains from the power supply controller 245 a parallel processing confirmation signal, which will be described later. Based on the parallel processing confirmation signal, the recording/playing/displaying unit 242 recognizes a request to output information about the processing state of parallel-to-dubbing processing to the power supply controller 245. After that, the recording/playing/displaying unit 242 creates a parallel processing state signal, which doubles as a processing execution signal about whether or not the parallel-to-dubbing processing is in progress. The recording/playing/displaying unit 242 suitably outputs the parallel processing state signal to the power supply controller 245.

When there is programmed recording that has been set up, the recording/playing/displaying unit 242 performs recording processing in accordance with the settings, and records, for example, a television program on an arbitrary channel in the HD 171 or the DVD 181. Specifically, the recording/playing/displaying unit 242 recognizes from a time kept by a timekeeper (not shown) that the time for programmed recording has arrived, and creates set station information that contains information about a channel programmed to be recorded. The recording/playing/displaying unit 242 suitably converts the set station information into the set station signal Sps, and outputs the signal to the sub CPU 220. After that, the recording/playing/displaying unit 242 suitably obtains video data of the tuned video signal Ses from the tuner unit 120, and suitably obtains audio data of the input digital audio signal Sdo from the audio A/D converter 130. HD recording request information is then created which requests to store the program data and the like in, for example, the HD 171. The recording/playing/displaying unit 242 suitably converts the program data, the HD recording request information, and the like into the HD record signal Smh, and outputs the signal to the HD drive 170. This causes the HD drive 170 to store the program data in the HD 171 based on the HD record signal Smh, and the program data of the television program that has been programmed to be recorded is thus recorded in the HD 171.

The recording/playing/displaying unit 242 performs other processing than dubbing-related processing suitably in accordance with an input operation made to the input unit, for example, processing of displaying a menu screen on the screen, processing of changing the channel of a television program displayed on the screen, and processing of fast-forwarding or skipping a television program in the HD 171 or the DVD 181. The recording/playing/displaying unit 242 suitably creates a processing start signal, and outputs the signal to the power supply controller 245.

The post-processing active timer 243 is controlled by the timer controller 246, and counts the time elapsed since the completion of dubbing based on a reference pulse of an internal clock, for example. The post-processing active timer 243 suitably outputs time information about the counted elapsed time to the timer controller 246.

The concurrent-active timer 244 has a configuration similar to that of the post-processing active timer 243. The concurrent-active timer 244 is controlled by the timer controller 246, and counts the time elapsed since parallel-to-dubbing processing is executed. The concurrent-active timer 244 suitably outputs time information about the counted elapsed time to the timer controller 246.

The power supply controller 245 controls the operation of the timer controller 246 suitably based on signals from the units 241 and 242. The power supply controller 245 also controls the operation of the power supply unit 230 suitably based on signals from the input unit and from the units 241, 242, and 246. Specifically, the power supply controller 245 suitably obtains an error finish signal or a normal finish signal from the dubbing controller 241. The power supply controller 245 recognizes from the obtained signal that dubbing has been completed. When it is an error finish signal that is obtained, the power supply controller 245 recognizes that the dubbing has ended in error. Then, the power supply controller 245 creates supply continuation information requesting to continue supplying power to the recorder/player 100. The power supply controller 245 suitably converts the supply continuation information into the supply continuation signal Ske, and outputs the signal to the power supply unit 230.

When it is a normal finish signal that is obtained, the power supply controller 245 recognizes that the dubbing has been finished normally. Then, the power supply controller 245 creates a parallel processing confirmation signal requesting an output of information about the processing state of parallel-to-dubbing processing. The parallel processing confirmation signal is suitably outputted to the recording/playing/displaying unit 242. After that, the power supply controller 245 suitably obtains a parallel processing state signal from the recording/playing/displaying unit 242. Based on the parallel processing state signal, the power supply controller 245 judges whether parallel-to-dubbing processing is in progress or not. For instance, the power supply controller 245 judges whether or not processing of displaying an arbitrary channel on the screen that has been performed in parallel with the dubbing is still continued. When it is judged that the parallel-to-dubbing processing is in progress, the power supply controller 245 suitably outputs the supply continuation signal Ske to the power supply unit 230.

On the other hand, when it is judged that the parallel-to-dubbing processing is no longer executed, the power supply controller 245 creates a post-processing timekeeping request signal which requests the post-processing active timer 243 to start counting time. The post-processing timekeeping request signal is suitably outputted to the timer controller 246. After that, the power supply controller 245 suitably obtains a interruption signal is outputted to the timer controller 246. Then, upon obtaining a post-processing timekeeping interruption completion signal from the timer controller 246, the power supply controller 245 suitably outputs the supply continuation signal Ske to the power supply unit 230.

The power supply controller 245 also judges whether or not a cancel completion signal has been obtained from the dubbing controller 241 before an error finish signal or a normal finish signal is obtained from the dubbing controller 241, in other words, whether or not an input operation has been made during dubbing to cancel and end the dubbing. When it is judged that the input operation to cancel and end dubbing has been made, the supply continuation signal Ske is suitably outputted to the power supply unit 230.

The power supply controller 245 also judges whether or not a processing start signal has been obtained from the recording/playing/displaying unit 242 before an error finish signal or a normal finish signal is obtained from the dubbing controller 241, in other words, whether or not an input operation has been made during dubbing to execute parallel-to-dubbing processing. When it is judged that the input operation has been made, the power supply controller 245 creates a parallel timekeeping request signal, which requests the concurrent-active timer 244 to start counting time. The parallel timekeeping request signal is suitably outputted to the timer controller 246. After that, the power supply controller 245 suitably obtains from the timer controller 246 a parallel timekeeping completion signal, which will be described later. The power supply controller 245 recognizes from the parallel timekeeping completion signal that the concurrent-active timer 244 has finished counting a set timekeeping time, m minutes, as a given period of time set in advance. The power supply controller 245 then judges whether or not the dubbing has been completed. When it is judged that the dubbing has been completed, the power supply controller 245 judges whether or not the dubbing has ended in error. Judging that the dubbing has ended in error, the power supply controller 245 suitably outputs the supply continuation signal Ske to the power supply unit 230. When it is judged that the dubbing has been finished normally, on the other hand, the power supply controller 245 executes the processing described above and judges whether or not the parallel-to-dubbing processing is in progress. Then, when it is judged that the parallel-to-dubbing processing is still continued, the power supply controller 245 suitably outputs the supply continuation signal Ske to the power supply unit 230. On the other hand, when it is judged that the parallel-to-dubbing processing is no longer executed, the supply interruption signal Scy is suitably outputted to the power supply unit 230.

The power supply controller 245 suitably judges whether or not a processing start signal has been obtained from the recording/playing/displaying unit 242 during a period after the parallel timekeeping request is outputted until the parallel timekeeping completion signal is obtained, in other words, whether or not an input operation has been made to execute other processing than dubbing while the concurrent-active timer 244 is counting. When it is judged that the input operation has been made, the power supply controller 245 creates a reset request signal, which requests the concurrent-active timer 244 to reset the time count and start counting anew. The reset request signal is then suitably outputted to the timer controller 246.

The power supply controller 245 also judges whether or not an input operation has been made to cancel and end dubbing while the concurrent-active timer 244 is counting time. When it is judged that the input operation to cancel and end dubbing has been made, a parallel timekeeping interruption signal is outputted to the timer controller 246. After that, upon obtaining a parallel timekeeping interruption completion signal from the timer controller 246, the power supply controller 245 suitably outputs the supply continuation signal Ske to the power supply unit 230.

The power supply controller 245 suitably obtains a power supply start signal from the input unit, and recognizes a setting input for starting power supply to the recorder/player 100 to thereby power the recorder/player 100 on. Then, the power supply controller 245 creates on-request information requesting to turn on the power of the recorder/player 100. The on-request information is suitably converted into the power-on signal Suo, and the signal is outputted to the power supply unit 230. The power supply controller 245 also suitably obtains a power supply end signal from the input unit, and recognizes a setting input for ending power supply to the recorder/player 100 to thereby power the recorder/player 100 off. Then, the power supply controller 245 creates off-request information requesting to turn off the power of the recorder/player 100. The off-request information is suitably converted into the power-off signal Suf, and the signal is outputted to the power supply unit 230.

The timer controller 246 is controlled by the power supply controller 245, and suitably controls the operation of the post-processing active timer 243 and the concurrent-active timer 244. Specifically, the timer controller 246 suitably obtains a post-processing timekeeping request signal from the power supply controller 245. Based on the post-processing timekeeping request signal, the timer controller 246 resets and then activates the post-processing active timer 243. After that, the timer controller 246 suitably obtains time information from the post-processing active timer 243 to suitably judge whether or not a set timekeeping time, n minutes, have been counted off. When it is judged that n minutes are up, the timer controller 246 makes the post-processing active timer 243 stop counting. The timer controller 246 then creates a post-processing timekeeping completion signal, which notifies that the counting of n minutes has been finished. The post-processing timekeeping completion signal is suitably outputted to the power supply controller 245. The timer controller 246 also suitably obtains a post-processing timekeeping interruption signal from the power supply controller 245. Based on the post-processing timekeeping interruption signal, the timer controller 246 interrupts the timekeeping by the post-processing active timer 243. After that, the timer controller 246 creates a post-processing timekeeping interruption completion signal, which signals that the timekeeping by the post-processing active timer 243 has been interrupted. The post-processing timekeeping interruption completion signal is suitably outputted to the power supply controller 245.

The timer controller 246 also suitably obtains a parallel timekeeping request signal from the power supply controller 245. Based on the parallel timekeeping request signal, the timer controller 246 resets and then activates the concurrent-active timer 244. After that, the timer controller 246 suitably obtains time information from the concurrent-active timer 244 to suitably judge whether or not a set timekeeping time, m minutes, have been counted off. When it is judged that m minutes are up, the timer controller 246 makes the concurrent-active timer 244 stop counting. The timer controller 246 then creates a parallel timekeeping completion signal, which signals that the counting of m minutes has been finished. The parallel timekeeping completion signal is suitably outputted to the power supply controller 245. The timer controller 246 also suitably obtains a parallel timekeeping interruption signal from the power supply controller 245. Based on the parallel timekeeping interruption signal, the timer controller 246 interrupts the timekeeping by the concurrent-active timer 244. After that, the timer controller 246 creates a parallel timekeeping interruption completion signal, which signals that the timekeeping by the concurrent-active timer 244 has been interrupted. The parallel timekeeping interruption completion signal is suitably outputted to the power supply controller 245. The timer controller 246 also suitably obtains a reset request signal from the power supply controller 245. Based on the reset request signal, the timer controller 246 resets the count of the concurrent-active timer 244, and makes the concurrent-active timer 244 start counting anew.

### [Operation of Recorder/Player]

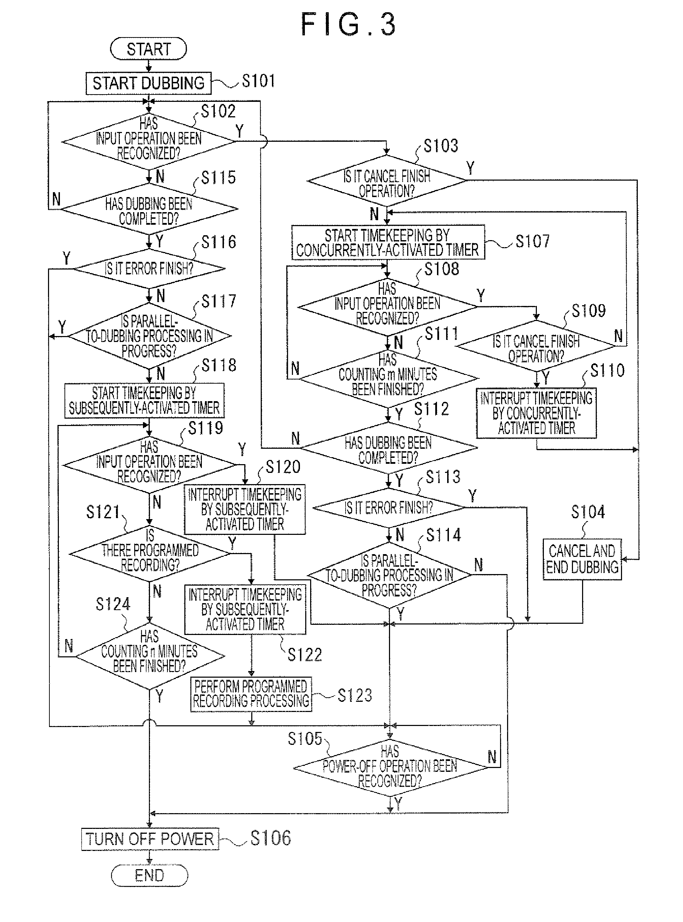

A description given next with reference to FIG. 3 is about the operation of the recorder/player 100, specifically, power supply processing in dubbing. The description takes, as an example, power supply processing in dubbing of program data stored in the HD 171 to the DVD 181.

First, power is supplied to the recorder/player 100 and the dubbing controller 241 of the CPU 240 then recognizes an input operation made by a user to start dubbing. Based on the input operation, the dubbing controller 241 starts dubbing of program data stored in the HD 171 to the DVD 181 as shown in FIG. 3 (Step S101). After that, the CPU 240 has the power supply controller 245 judge whether or not the dubbing controller 241 or the recording/playing/displaying unit 242 has recognized an input operation (Step S102).

When it is judged in Step S102 that an input operation has been recognized, the power supply controller 245 judges whether or not the input operation is a cancel finish operation for canceling the dubbing (Step S103). When it is judged in Step S103 that the input operation is a cancel finish operation, the power supply controller 245 outputs supply continuation information to the power supply unit 230. The dubbing controller 241 cancels and ends the dubbing based on the cancel finish operation (Step S104). After that, upon obtaining the supply continuation information, the power supply unit 230 judges whether or not off-request information has been obtained from the power supply controller 245, in other words, whether or not the power supply controller 245 has recognized a power-off operation for powering the recorder/player 100 off (Step S105). When it is judged in Step S105 that the power-off operation has not been recognized, the power supply unit 230 repeats the processing of Step S105. On the other hand, when it is judged in Step S105 that the power-off operation has been recognized, the power of the recorder/player 100 is immediately turned off (Step S106). Then, the power supply processing in dubbing is ended.

When it is judged in Step S103 that the input operation is not a cancel finish operation, for example, when the input operation is judged as one to play another television program or the like in the HD 171, the power supply controller 245 outputs a parallel timekeeping request signal to the timer controller 246. Obtaining the parallel timekeeping request signal, the timer controller 246 resets and then activates the concurrent-active timer 244, and has the concurrent-active timer 244 start counting the time elapsed since the parallel-to-dubbing processing is executed (Step S107). The recording/playing/displaying unit 242 starts the parallel-to-dubbing processing such as, for example, playing another television program or the like in the HD 171, based on the input operation. After that, the power supply controller 245 judges whether or not the dubbing controller 241 or the recording/playing/displaying unit 242 has recognized a new input operation (Step S108).

When it is judged in Step S108 that a new input operation has been recognized, the power supply controller 245 performs the same processing as Step S103 to judge whether or not the input operation is a cancel finish operation (Step S109). When it is judged in Step S109 that the input operation is not a cancel finish operation, the power supply controller 245 outputs a reset request signal to the timer controller 246. Obtaining the reset request signal, the timer controller 246 returns to Step S107 to reset the count of the concurrent-active timer 244 and make the concurrent-active timer 244 start counting anew. The recording/playing/displaying unit 242 executes other processing than dubbing cancel finish processing, for example, processing of fast-forwarding the television program that is being played, based on the input operation. When it is judged in Step S109 that the input operation is a cancel finish operation, on the other hand, the power supply controller 245 outputs a parallel timekeeping interruption signal to the timer controller 246. Obtaining the parallel timekeeping interruption signal, the timer controller 246 interrupts the timekeeping by the concurrent-active timer 244 (Step S110). The timer controller 246 then outputs a parallel timekeeping interruption completion signal to the power supply controller 245. Obtaining the parallel timekeeping interruption completion signal, the power supply controller 245 outputs supply continuation information to the power supply unit 230. The dubbing controller 241 proceeds to Step S 104 to cancel and end the dubbing based on the cancel finish operation.

When it is judged in Step S108 that no new input operation has been recognized, the power supply controller 245 judges whether or not a parallel timekeeping completion signal has been obtained from the timer controller 246, in other words, whether or not the concurrent-active timer 244 has finished counting m minutes (Step S111). When it is judged in Step S111 that the concurrent-active timer 244 has not finished counting m minutes, the power supply controller 245 returns to Step S108. On the other hand, when it is judged in Step S111 that m minutes have been counted off, the power supply controller 245 judges whether or not the dubbing has been completed (Step S112). When it is judged in Step S112 that the dubbing has not been completed yet, the power supply controller 245 returns to Step S102. When it is judged in Step S 112 that the dubbing has already been completed, on the other hand, the power supply controller 245 judges whether or not the dubbing has ended in error (Step S113). When it is judged in Step S 113 that the dubbing has ended in error, the power supply controller 245 outputs supply continuation information to the power supply unit 230. Obtaining the supply continuation information, the power supply unit 230 executes the processing of Step S105. When it is judged in Step S113 that the dubbing has been finished normally, the power supply controller 245 judges whether or not the parallel-to-dubbing processing is in progress (Step S114). When it is judged in Step S114 that the parallel-to-dubbing processing is no longer executed, the power supply controller 245 outputs supply interruption information to the power supply unit 230. Obtaining the supply interruption information, the power supply unit 230 then executes the processing of Step S106. On the other hand, when it is judged in Step S 114 that the paraliel-to-dubbing processing is still continued, the power supply controller 245 outputs supply continuation information to the power supply unit 230. Obtaining the supply continuation information, the power supply unit 230 then executes the processing of Step S105.

When it is judged in Step S102 that no input operation has been recognized, the power supply controller 245 judges whether or not the dubbing has been completed (Step S115). When it is judged in Step S115 that the dubbing has not been completed, the power supply controller 245 returns to Step S102. When it is judged in Step S115 that the dubbing has been completed, on the other hand, the power supply controller 245 performs the same processing as Step S113 to judge whether the dubbing has ended in error (Step S 116). When it is judged in Step S 116 that it is error finish, the power supply controller 245 outputs supply continuation information to the power supply unit 230. Obtaining the supply continuation information, the power supply unit 230 then executes the processing of Step S105. When it is judged in Step S 116 that the dubbing has been finished normally, the power supply controller 245 performs the same processing as Step S114 to judge whether or not the parallel-to-dubbing processing is in progress (Step S 117). For example, the power supply controller 245 judges whether or not playing of another television program in the HD 171 is being continued.

When it is judged in Step S117 that the parallel-to-dubbing processing is still continued, the power supply controller 245 outputs supply continuation information to the power supply unit 230. Obtaining the supply continuation information, the power supply unit 230 then executes the processing of Step S105. When it is judged in Step S117 that the parallel-to-dubbing processing is no longer executed, on the other hand, the power supply controller 245 outputs a post-processing timekeeping request signal to the timer controller 246. Obtaining the post-processing timekeeping request signal, the timer controller 246 resets and then activates the post-processing active timer 243 to make the post-processing active timer 243 start counting the time elapsed since the completion of the dubbing (Step S118). The power supply controller 245 performs the same processing as Step S108 to judge whether or not the dubbing controller 241 or the recording/playing/displaying unit 242 has recognized a new input operation (Step S 119).

When it is judged in Step S119 that a new input operation has been recognized, the power supply controller 245 outputs a post-processing timekeeping interruption signal to the timer controller 246. Obtaining the post-processing timekeeping interruption signal, the timer controller 246 interrupts the timekeeping by the post-processing active timer 243 (Step S120). The timer controller 246 then outputs a post-processing timekeeping interruption completion signal to the power supply controller 245. Obtaining the post-processing timekeeping interruption completion signal, the power supply controller 245 outputs supply continuation information to the power supply unit 230. The recording/playing/displaying unit 242 performs various types of processing in accordance with the input operation. The power supply unit 230 executes the processing of Step S105 upon obtaining the supply continuation information.

When it is judged in Step S119 that no new input operation has been recognized, the power supply controller 245 judges whether or not programmed recording has been set (Step S121). When it is judged in Step S121 that programmed recording has been set, the power supply controller 245 outputs a post-processing timekeeping interruption signal to the timer controller 246. Obtaining the post-processing timekeeping interruption signal, the timer controller 246 interrupts the timekeeping by the post-processing active timer 243 (Step S122). The CPU 240 has the recording/playing/displaying unit 242 execute the programmed recording (Step S123). The CPU 240 then has the power supply unit 230 suitably execute the processing of Step S105. On the other hand, when it is judged in Step S121 that programmed recording has not been set, the power supply controller 245 judges whether or not a post-processing timekeeping completion signal has been obtained from the timer controller 246, in other words, whether or not the post-processing active timer 243 has finished counting n minutes (Step S124). When it is judged in Step S124 that the post-processing active timer 243 has not finished counting n minutes, the power supply controller 245 returns to Step S119. When it is judged in Step S124 that n minutes have been counted off, the power supply controller 245 suitably outputs supply interruption information to the power supply unit 230. Obtaining the supply interruption information, the power supply unit 230 executes the processing of Step S106.

As has been described, in the above embodiment, the recorder/player 100 uses the dubbing controller 241 of the CPU 240 to dub, for example, program data from the HD 171 to the DVD 181. When an input operation to perform parallel-to-dubbing processing, which is other processing than dubbing, is recognized during dubbing, the recording/playing/displaying unit 242 of the CPU 240 suitably executes the parallel-to-dubbing processing. After that, the power supply controller 245 of the CPU 240 recognizes the completion of the dubbing, and suitably obtains a parallel processing state signal from the recording/playing/displaying unit 242. The power supply controller 245 then judges from the parallel processing state signal whether or not the parallel-to-dubbing processing is in progress. When it is judged that the parallel-to-dubbing processing is no longer executed, the power supply controller 245 outputs supply interruption information to the power supply unit 230. When it is judged that the parallel-to-dubbing processing is still continued, on the other hand, the power supply controller 245 outputs supply continuation information to the power supply unit 230. Upon obtaining the supply interruption information from the power supply controller 245, the power supply unit 230 interrupts power supply to the recorder/player 100 and immediately turns off the power of the recorder/player 100. Upon obtaining the supply continuation information from the power supply controller 245, the power supply unit 230 keeps supplying power to the recorder/player 100, and does not turn off the power of the recorder/player 100 until a power-off operation is recognized.

This enables the recorder/player 100 to keep receiving power supply until a power-off operation is recognized in the case where dubbing is ended whereas processing that has been performed in parallel with the dubbing, for example, processing of playing another television program or the like in the HD 171, is still continued. Accordingly, when, for example, dubbing is ended while a user is viewing a television program or the like played in the HD 171, the power is kept on irrespective of whether the user is aware of the completion of the dubbing or not, and the viewing of the television program or the like played is not interrupted by an unintentional power off. Moreover, in the case where, for example, the playing processing on the HD 171 that has been performed in parallel with dubbing has been finished by the time the dubbing is completed, the recorder/player 100 can immediately stop power supply without recognizing an input operation. This means that the recorder/player 100 can be powered off without having a user in the vicinity, thereby consuming less power. The recorder/player 100 is thus capable of appropriate power supply.

The power supply controller 245 judges whether or not dubbing has ended in error. When it is judged that dubbing has ended in error, supply continuation information is outputted to the power supply unit 230. This enables the recorder/player 100 to keep the power on until a power-off operation is recognized after dubbing ends in error. With the power of the recorder/player 100 kept on after error finish, a user who, for example, comes back to the vicinity of the recorder/player 100 after error finish can easily recognize the fact that dubbing has ended in error. The recorder/player 100 can thus be improved in user-friendliness.

The power supply controller 245 judges whether or not parallel-to-dubbing processing is ongoing after dubbing is completed. When it is judged that the parallel-to-dubbing processing is no longer executed, the power supply controller 245 outputs a post-processing timekeeping request signal to the timer controller 246 to make the post-processing active timer 243 start counting n minutes. After that, the power supply controller 245 judges whether or not a processing start signal has been obtained from, for example, the recording/playing/displaying unit 242 while the post-processing active timer 243 is counting, in other words, whether or not a new input operation has been recognized while the post-processing active timer 243 is counting. When it is judged that a new input operation has been recognized during the timekeeping, the power supply controller 245 outputs a post-processing timekeeping interruption signal to the timer controller 246 to interrupt the timekeeping by the post-processing active timer 243. Then, supply continuation information is outputted to the power supply unit 230. On the other hand, when it is judged that n minutes have been counted off without recognizing a new input operation, the power supply controller 245 outputs supply interruption information to the power supply unit 230.

This enables the recorder/player 100 to keep the power on for n minutes after dubbing is completed in the case where parallel-to-dubbing processing has been completed by the end of the dubbing. If an input operation is recognized during the n minutes, the power is kept on even after the n minutes are up until a power-off operation is recognized. Accordingly, in the case where a user is away from the recorder/player 100 at the time dubbing and parallel-to-dubbing processing are finished, for example, the recorder/player 100 can be put into operation without needing the user to make an input operation for turning the power on if the user returns to the recorder/player 100 within n minutes. Even if the user does not return within n minutes, the recorder/player 100 is powered off after the elapse of n minutes, thereby consuming less power. The recorder/player 100 is thus capable of appropriate power supply.

The power supply controller 245 judges whether or not a processing start signal has been obtained from the recording/playing/displaying unit 242 during dubbing, in other words, whether or not the recording/playing/displaying unit 242 has recognized an input operation during dubbing. When it is judged that an input operation has been recognized during dubbing, the power supply controller 245 outputs a parallel timekeeping request signal to the timer controller 246 to make the concurrent-active timer 244 start counting m minutes. After that, when it is judged that m minutes have been counted off without recognizing a new input operation, the power supply controller 245 judges whether or not the dubbing has been completed. When it is judged that the dubbing has been completed, the power supply controller 245 outputs supply interruption information to the power supply unit 230. When it is judged that the dubbing has not been completed, the power supply controller 245 does not output supply interruption information to the power supply unit 230. This enables the recorder/player 100 to suitably turn off the power after m minutes elapse since the time of recognition of an input operation during dubbing. Accordingly, in the case where a user makes an input operation and then leaves the recorder/player 100 for a long time, for example, the recorder/player 100 can be powered off at a suitably earlier time compared to a configuration in which the power is turned off based on the time elapsed since completion of dubbing. The recorder/player 100 can thus suitably reduce power consumption and is capable of more appropriate power supply.

The power supply controller 245 judges whether or not a processing start signal has been obtained from the recording/playing/displaying unit 242, in other words, a new input operation has been recognized, while the concurrent-active timer 244 is counting. When it is judged that a new input operation has been recognized during the timekeeping, the power supply controller 245 outputs a reset request signal to the timer controller 246. The count of the concurrent-active timer 244 is reset and the concurrent-active timer 244 starts counting anew. This enables the recorder/player 100 to, when there are plural input operations recognized during dubbing, suitably turn the power off after m minutes elapse since the time of recognition of the last input operation. Accordingly, in the case where a user makes plural input operations over a long period of time, for example, there is no chance for the recorder/player 100 to be powered off against the will of the user unlike a configuration in which the power is turned off based on the time elapsed since recognition of the first input operation. The recorder/player 100 is thus capable of more appropriate power supply.

The processing control device and power supply control device of the present invention are applied to the recorder/player 100, which, for example, can play data of one program stored in the HD 171 while, for example, data of another program stored in the HD 171 is dubbed to the DVD 181. The recorder/player 100 provided is therefore capable of appropriate power supply and is highly user-friendly.

### [Modification of Embodiment]

The present invention is not limited to the embodiment described above, and includes the following modifications as long as an object of the present invention is attained.

A configuration has been shown as an example in which the power supply controller 245 has a function of judging whether or not dubbing has ended in error. Instead, a configuration without this function may be employed. Then, the processing of Step S 113 and Step S116 can be omitted. The recorder/player 100 can accordingly speed up power supply processing in dubbing.

A configuration has been shown as an example in which the power supply controller 245 has a function of judging whether or not parallel-to-dubbing processing is ongoing after dubbing is completed and controlling the post-processing active timer 243 suitably. Instead, a configuration that does not have this function and includes the following processing may be employed. That is, when it is judged in Step S117 that parallel-to-dubbing processing is no longer executed, the power supply controller 245 executes the processing of Step S121. When it is judged in Step S121 that programmed recording has been set, the processing of Step S123 is executed whereas the processing of Step S106 is executed when it is judged that programmed recording has not been set. With this configuration, the processing of Steps S118 through S120, and Steps S122 and S124 can be omitted. The recorder/player 100 can accordingly speed up power supply processing in dubbing. In addition, the need for the CPU 240 to have the post-processing active timer 243 is eliminated and the CPU 240 can have a simpler configuration. Furthermore, since the power supply controller 245 does not need to have a function of controlling the post-processing active timer 243, the configuration of the power supply controller 245 can be simplified. The cost of the recorder/player 100 can thus be reduced.

A configuration has been shown as an example in which the power supply controller 245 has a function of judging whether or not an input operation has been made during dubbing and controlling the concurrent-active timer 244 suitably. Instead, a configuration that does not have this function and includes the following processing may be employed. That is, when it is judged in Step S103 that the input operation is not a cancel finish operation, the power supply controller 245 executes the processing of Step S102. With this configuration, the processing of Steps S107 through S 114 can be omitted. The recorder/player 100 can accordingly speed up power supply processing in dubbing. In addition, the need for the CPU 240 to have the concurrent-active timer 244 is eliminated and the CPU 240 can have a simpler configuration. Furthermore, since the power supply controller 245 does not need to have a function of controlling the concurrent-active timer 244, the configuration of the power supply controller 245 can be simplified. The cost of the recorder/player 100 can thus be reduced.

A configuration has been shown as an example in which the power supply controller 245 has a function of judging whether or not a new input operation has been recognized while the concurrent-active timer 244 is counting, and suitably resetting the count of the concurrent-active timer 244 to make the concurrent-active timer 244 start counting anew. Instead, a configuration that does not have this function and includes the following processing may be employed. That is, when it is judged in Step S109 that the input operation is not a cancel finish operation, the power supply controller 245 executes the processing of Step S108. With this configuration, the power supply controller 245 does not need to have the function of resetting the count of the concurrent-active timer 244 to make the concurrent-active timer 244 start counting anew, and the configuration of the power supply controller 245 can be simplified. The cost of the recorder/player 100 can thus be reduced.

For instance, the following configuration may be employed. That is, the CPU 240 is provided with a time-setting-signal obtaining unit (not shown), which obtains a time setting signal according to an input operation for setting the set timekeeping time n minutes and m minutes arbitrarily, and a time setting unit (not shown), which sets the set timekeeping time n minutes and m minutes arbitrarily based on the time setting request signal. This configuration allows a user to suitably determine how much time should pass after dubbing is completed or after an input operation is made until power supply is stopped. The user-friendliness of the recorder/player 100 can thus be improved more.

For instance, the following configuration may be employed. That is, the CPU 240 of the recorder/player 100 has an automatic time setting unit (not shown). The concurrent-active timer 244 functions as the processing interval counter of the present invention. The timer controller 246 functions as the interval count recognizing unit of the present invention. Specifically, the timer controller 246 is given a function of recognizing, when a new input operation is recognized while the concurrent-active timer 244 is counting, the time counted by the concurrent-active timer 244 as intervals of input operations related to parallel-to-dubbing processing, and storing the input operation intervals in, for example, the memory 160. The concurrent-active timer 244 and the timer controller 246 in this configuration constitute the processing interval recognizing unit of the present invention.

In this configuration, after the power supply controller 245 of the CPU 240 executes the processing of Step S103, the recorder/player 100 has the automatic time setting unit recognize intervals of past input operations related to parallel-to-dubbing processing that have been stored in, for example, the memory 160 (Step S201). Based on the recognized input operation intervals, a set timekeeping time t, which is a given time of the post-processing active timer 243, is set anew (Step S202). To give an example of how to set the set timekeeping time t anew for the post-processing active timer 243, the mean value or maximum value of the recognized input operation intervals, or the maximum input operation interval plus an arbitrary time is calculated. The calculated time is stored as the set timekeeping time t of the post-processing active timer 243 in, for example, the memory 160.

After that, the automatic time setting unit executes the same processing as Step S202, and sets anew a set timekeeping time u, which is a given time of the concurrent-active timer 244 (Step S203). The power supply controller 245 recognizes the set timekeeping time u of the concurrent-active timer 244 that has been stored in the memory 160 (Step S204). The power supply controller 245 then creates a parallel timekeeping request signal requesting the concurrent-active timer 244 to start counting the set timekeeping time u, and outputs the signal to the timer controller 246. Obtaining the parallel timekeeping request signal, the timer controller 246 executes the processing of Step S107. After that, upon recognizing that the concurrent-active timer 244 has finished counting the set timekeeping time u, the timer controller 246 creates a parallel timekeeping completion signal and outputs the signal to the power supply controller 245. The power supply controller 245 judges, after outputting the parallel timekeeping request signal, whether or not the concurrent-active timer 244 has counted off the set timekeeping time u (Step S205).

When it is judged in Step S205 that the concurrent-active timer 244 has not finished counting the set timekeeping time u, the power supply controller 245 returns to an input operation waiting state, in other words, Step S108, to judge whether or not an input operation has been made. When it is judged in Step S205 that the concurrent-active timer 244 has finished counting the set timekeeping time u, the power supply controller 245 proceeds to Step S 112 to judge whether or not the dubbing has been completed. When it is judged in Step S109 that the input operation is not a cancel finish operation, the timer controller 246 recognizes the time counted by the concurrent-active timer 244 as intervals of input operations related to parallel-to-dubbing processing. The input operation intervals are stored in the memory 160 (Step S206). Then, the power supply controller 245 outputs a reset request signal to the timer controller 246.

When it is judged in Step S117 that the parallel-to-dubbing processing is no longer executed, the power supply controller 245 recognizes the set timekeeping time t of the post-processing active timer 243 that has been stored in the memory 160 (Step S207). The power supply controller 245 then creates a post-processing timekeeping request signal requesting the post-processing active timer 243 to start counting the set timekeeping time t, and outputs the signal to the timer controller 246. Obtaining the post-processing timekeeping request signal, the timer controller 246 proceeds to Step S118 to start counting the time elapsed since the completion of the dubbing. After that, upon recognizing that the post-processing active timer 243 has finished counting the set timekeeping time t, the timer controller 246 creates a post-processing timekeeping completion signal and outputs the signal to the power supply controller 245. When it is judged in Step S121 that programmed recording has not been set, the power supply controller 245 judges whether or not the post-processing active timer 243 has finished counting the set timekeeping time t (Step S208). When it is judged in Step S208 that the post-processing active timer 243 has not finished counting the set timekeeping time t, the power supply controller 245 returns to the processing of Step S 119. On the other hand, when it is judged that the post-processing active timer 243 has finished counting the set timekeeping time t, the power supply controller 245 suitably outputs supply interruption information to the power supply unit 230. Obtaining the supply interruption information, the power supply unit 230 executes the processing of Step S106, namely, the processing of powering off the recorder/player 100 immediately.

With this configuration, the recorder/player 100 can automatically set how much time should pass after dubbing is completed or after an input operation is made until the power is turned off based on intervals of input operations made by a user in accordance with how often the user makes input operations. Accordingly, the recorder/player 100 can automatically set a time until the power is turned off for each user, and the user-friendliness of the recorder/player 100 can thus be improved more.

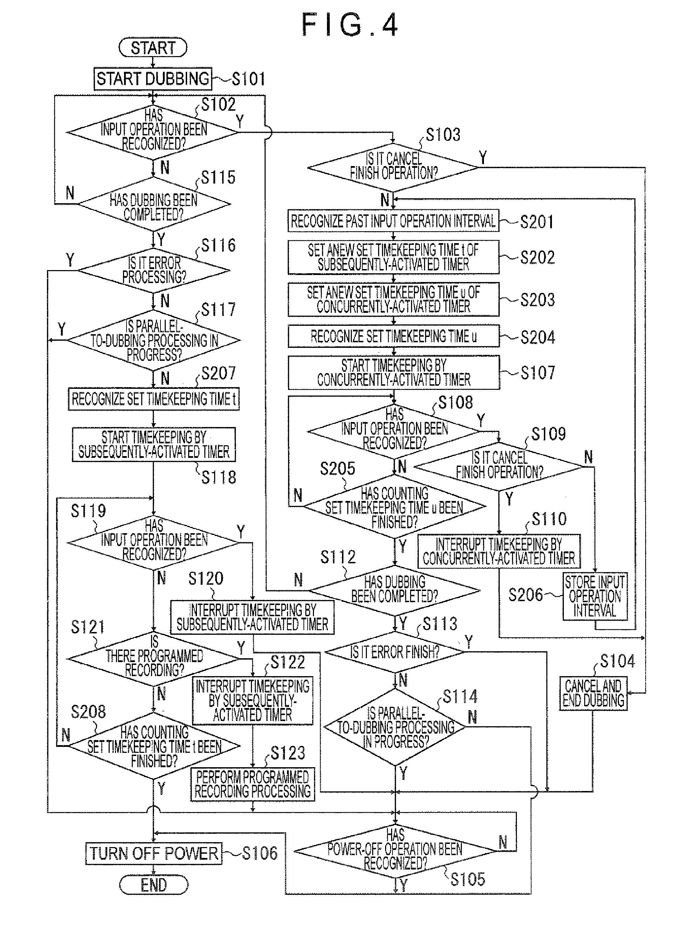

A configuration as the one shown in FIG. 4 may be employed in which the set timekeeping time t of the post-processing active timer 243, for example, is fixed to, e.g., n minutes and the set timekeeping time u of the concurrent-active timer 244 alone is set suitably anew based on input operation intervals. An alternative configuration may be employed in which the set timekeeping time u of the concurrent-active timer 244 is fixed to, e.g., m minutes and the set timekeeping time t of the post-processing active timer 243 alone is set suitably anew based on input operation intervals. With these configurations, the processing of Steps S202 and S207, or the processing of Steps S203 and S204 can be omitted. Power supply processing in dubbing can therefore be quickened more.

For instance, the following configuration may be employed. That is, the display device functions as the second processing executing unit of the present invention. The display device is given a function of outputting to the power supply controller 245 a processing execution signal that signals that, for example, a volume adjustment has been made. Furthermore, the power supply controller 245 is given a function of judging that an input operation for executing other processing than dubbing has been made when a processing execution signal is obtained from the display device. With this configuration, when, for example, a user only makes an input operation to adjust the volume of the display device and does not make any input operation concerning the operation of the recorder/player 100 after dubbing is completed, the power supply controller 245 can output supply continuation information to the power supply unit 230. This enables the recorder/player 100 to keep receiving power supply until a power-off operation is recognized when, for example, a user makes only an input operation to adjust the volume of the display device after dubbing is completed. Since the power is kept on despite the user making no input operation that is related to the operation of the recorder/player 100, there is no chance for an unintentional power off and, for example, resultant interruption of viewing of a television program or the like. The recorder/player 100 is thus capable of more appropriate power supply.

The power supply controller 245 may be given a function of outputting supply continuation information and supply interruption information to the power supply unit 230 in accordance with an input operation made through a remote controller for remotely operating the recorder/player 100 and the display device. The power supply controller 245 may be given a function of outputting supply continuation information and supply interruption information to the power supply unit 230 in accordance with the processing state of a connected device.

The processing control device and power supply control device of the present invention may be applied to the recorder/player 100 that does not have the DVD drive 180.

A configuration has been shown as an example in which the processing control device and power supply control device of the present invention are applied to the recorder/player 100. However, the present invention is not limited thereto and is applicable to any configuration that controls power supply. Specifically, the present invention may be applied to a music recorder/player that can simultaneously execute processing of dubbing music data stored in, for example, an HD to a recording medium such as an MD (Mini Disc) and processing of playing another piece of music data stored in the HD.

The functions described above are in the form of programs. Instead, those functions can be hardware such as a circuit board or one device such as an IC (Integrated Circuit), and can be used in either form. When the functions take the form of programs or are read out of a separate recording medium, handling is easy and uses are readily increased.

Specific configurations and procedures for carrying out the present invention can be modified suitably into other configurations and procedures as long as an object of the present invention is attained.

As has been described, in the above embodiment, the recorder/player 100 uses the dubbing controller 241 of the CPU 240 to dub program data in the HD 171 to the DVD 181, for example. When the recording/playing/displaying unit 242 of the CPU 240 recognizes during dubbing an input operation for executing paraliel-to-dubbing processing, the parallel-to-dubbing processing is suitably executed. After that, upon recognizing that the dubbing has been completed, the power supply controller 245 of the CPU 240 suitably obtains a parallel processing state signal from the recording/playing/displaying unit 242. The power supply controller 245 judges from the parallel processing state signal whether or not the parallel-to-dubbing processing is in progress. When it is judged that the parallel-to-dubbing processing is no longer executed, the power supply controller 245 outputs supply interruption information to the power supply unit 230.

This enables the recorder/player 100 to keep receiving power supply until the power supply unit 230 recognizes a power-off operation in the case where processing that has been performed in parallel with dubbing, for example, processing of playing another television program or the like in the HD 171, is still ongoing after the dubbing is completed. Accordingly, when, for example, dubbing is ended while a user is viewing a television program or the like played in the HD 171, the power is kept on irrespective of whether the user is aware of the completion of the dubbing or not, and the viewing of the television program or the like played is not interrupted by an unintentional power off. Moreover, in the case where, for example, the playing processing on the HD 171 that has been performed in parallel with dubbing has been finished by the time the dubbing is completed, the recorder/player 100 can cause the power supply unit 230 to immediately stop power supply without recognizing an input operation. This means that the recorder/player 100 can be powered off without needing a user to be in the vicinity, thereby consuming less power. The recorder/player 100 is thus capable of appropriate power supply.

### INDUSTRIAL APPLICABILITY

The present invention can be used as a processing control device for controlling power supply, a power supply control device, a processing control method, a program thereof, and a recording medium containing the program, and is applicable to a recorder or a recorder/player system that has a dubbing function for re-recording image data or the like recorded in various recording media such as magnetic tapes, magnetic disks, optical disks, and magneto-optical disks in other various recording media.

## Claims

1. A processing control device, comprising:
a first processing executing unit for executing a first processing;
a second processing executing unit for executing a second processing which differs from the first processing;
an execution signal obtaining unit for obtaining a processing execution signal that signals execution of the second processing;
a processing execution recognizing unit for recognizing, from the processing execution signal, execution of the second processing;
a processing end recognizing unit for recognizing completion of the first processing; and
a power supply controller for judging whether or not execution of the second processing has been recognized upon recognition of completion of the first processing, and when it is judged that execution of the second processing has not been recognized, controlling a power supply unit for supplying electric power to execute power supply interruption processing in which the supply is stopped.

2. A processing control device according to Claim 1, wherein:
the processing end recognizing unit judges whether or not the first processing has been finished abnormally; and
when it is judged that the first processing has been finished abnormally, the power supply controller does not control the power supply unit to execute the power supply interruption processing.

3. A processing control device according to Claim 1 or 2, further comprising:
a post-processing timekeeper for counting time elapsed since completion of the first processing;
a post-processing timekeeping recognizing unit for recognizing that the post-processing timekeeper has finished counting a given time; and
a post-processing timekeeping controller for controlling the post-processing timekeeper to start counting when it is judged that execution of the second processing has not been recognized upon recognition of completion of the first processing, the post-processing timekeeping controller controlling, when the execution of the second processing is recognized during the counting, the post-processing timekeeper to finish counting,
wherein upon recognizing that the post-processing timekeeper has finished counting the given time, the power supply controller control the power supply unit to execute the power supply interruption processing.

4. A processing control device according to any one of Claims 1 through 3, comprising:
a mid-processing timekeeper for counting time elapsed since recognition of execution of the second processing;
a mid-processing timekeeping recognizing unit for recognizing that the mid-processing timekeeper has finished counting the given time; and
a mid-processing timekeeping controller for controlling the mid-processing timekeeper to start counting when execution of the second processing is recognized while the first processing is being executed,
wherein the power supply controller judges whether or not completion of the first processing has been recognized upon recognizing that the mid-processing timekeeper has finished counting the given time, and when it is judged that completion of the first processing has been recognized, the power supply controller controls the power supply unit to execute the power supply interruption processing.

5. A processing control device according to Claim 4, wherein when next execution of the second processing is recognized white the mid-processing timekeeper is counting, the mid-processing timekeeping controller resets the counting and controls the mid-processing timekeeper to start counting anew.

6. A processing control device according to any one of Claims 3 through 5, further comprising:
a time-setting-signal obtaining unit for obtaining a time setting signal according to an input operation to set the given time arbitrarily; and
a time setting unit for setting the given time arbitrarily in accordance with the time setting signal.

7. A processing control device according to any one of Claims 3 through 6, further comprising:
a processing interval recognizing unit for recognizing intervals at which execution of the second processing is recognized while the first processing is being executed; and
an automatic time setting unit for setting the given time in accordance with the intervals.

8. A processing control device according to Claim 7, wherein the processing interval recognizing unit includes:
a processing interval counter for counting intervals at which execution of the second processing is recognized while the first processing is being executed; and
an interval count recognizing unit for causing the processing interval counter to start counting when execution of the second processing is recognized while the first processing is being executed, and when next execution of the second processing is recognized, a time counted by the processing interval counter is recognized as the intervals.

9. A processing control device according to any one of Claims 1 through 8, wherein the first processing is processing of re-storing data in a second storage, the data having been stored in a first storage which can store various kinds of data.

10. A power supply control device, comprising:
a power supply unit for supplying power; and
the processing control device of any one of Claims 1 through 9.

11. A processing control method, comprising:
executing a first processing;
executing a second processing which differs from the first processing;
obtaining a processing execution signal that signals execution of the second processing;
recognizing execution of the second processing from the processing execution signal;
recognizing completion of the first processing; and
judging whether or not execution of the second processing has been recognized upon recognition of completion of the first processing, and when it is judged that execution of the second processing has not been recognized, power supply interruption processing is executed to cause a power supply unit that supplies electric power to stop the supply.

12. A processing control program for operating a computing unit to function as the processing control device of any one of Claims 1 through 9.

13. A processing control program for operating a computing unit to execute the processing control method of Claim 11.

14. A recording medium containing a processing control program, wherein the processing control program of Claim 12 or 13 is stored in a manner readable by a computing unit.
